# EUROPEAN PATENT APPLICATION

(11) **EP 4 715 499 A1**
(43) Date of publication of application: **25.03.2026**
(21) Application number: 25201325.5
(22) Date of filing: 10.09.2025
(51) Int. Cl.: G05B 19/042, G05B 19/05

(54) **DYNAMIC INTERFACING BETWEEN CLIENT DEVICES AND INDUSTRIAL AUTOMATION DEVICES**

(30) Priority: 24.09.2024 US 202418894798
(71) Applicant: Rockwell Automation Technologies, Inc., Mayfield Heights, OH 44124 (US)
(72) Inventor: Mills, Jonathan A., Mayfield Heights, OH (US); Wiese, Todd A., Mayfield Heights, OH, 44124 (US)
(74) Representative: Grünecker Patent- und Rechtsanwälte PartG mbB

(57) **Abstract**

This disclosure describes interfacing techniques between client devices (110) and industrial automation devices (160) in industrial automation environments. The client devices described herein are configured to submit capabilities requests to an industrial automation devices to determine capabilities and build device profiles, according to some implementations. A user may configure options of the capabilities by making configuration selections within a user interface of the client device. When configuration selections are received via the user interface, the client device submits command requests to the industrial automation devices to configure the capabilities.

## Description

### BACKGROUND

In industrial settings, automation devices are equipped with a range of configurable capabilities. These automation devices are configured by operators using client devices that interface with the automation devices. To facilitate the configuration, client devices employ software tools that include device profiles detailing the capabilities of each automation device. When an operator wishes to configure an automation device, the relevant capabilities from its profile are displayed in the client device, allowing the operator to make configuration selections.

In existing systems, client devices are pre-loaded (e.g., before delivery to customers) with a substantial number of device profiles. Each device profile is separately crafted in a labor-intensive process involving a thorough review of product specifications and control schemes associated with the automation device. With many potential devices for a device client to manage, the file sizes associated with the maintenance of device profiles in the software tool becomes large. This leads to inefficiencies in computer resources, especially since a given client device may utilize only a fraction of its stored device profiles.

Furthermore, the same capability may require different interfacing methods across various device models due, for example, to distinct address configurations, syntax, and parameter values. In existing systems, each client device may maintain addressing information for many capabilities across various industrial automation devices. This leads to further inefficiencies, particularly in environments involving many client devices. Specifically, addressing information for each capability of each industrial automation device must be uniquely identified and integrated to the software tools of the various client devices. Furthermore, any updates to addressing information (which may occur, for example, when an automation device is updated with a new capability), are individually incorporated in each client device.

### SUMMARY

The technology described herein includes a client device that dynamically builds device profiles defining the capabilities of automation devices in an industrial system. The automation devices contain capability lists that client devices can query to determine the capabilities and options of the associated automation devices. As a result, client devices do not need to come pre-loaded with device profiles. The technology also incorporates a mapping service that maintains addressing information for interfacing with the capabilities of the automation devices. The capability lists of the automation devices include addressing information for interfacing with the capabilities, which can be queried by the mapping service. Accordingly, client devices do not need to maintain the addressing information, since it is maintained centrally in the mapping service.

In an implementation, a client device in an industrial automation environment submits a capabilities request to an industrial automation device for options of a capability supported by the industrial automation device. The industrial automation device is configured to control a process element such as a motor. After submitting the capabilities request, the client device receives a capabilities response indicating the capabilities of the industrial automation device. The industrial automation device generates the capabilities response using a capabilities list maintained in the industrial automation device according to some implementations. The client device displays the capabilities in a user interface, allowing a user to make configuration selections. Once a configuration selection is received via the user interface, the client device submits a command request to the industrial automation device to configure the capabilities of the industrial automation device. Accordingly, the client device determines device capabilities "on-the-fly," allowing users to configure devices without the use of pre-loaded device information.

This Summary introduces a selection of concepts in a simplified form that are further described below in the Technical Disclosure. It may be understood that this Summary is not intended to identify key features or essential features of the claimed subject matter, nor is it intended to be used to limit the scope of the claimed subject matter.

### BRIEF DESCRIPTION OF THE DRAWINGS

Fig. 1 illustrates an industrial automation environment in an implementation.
Fig. 2 illustrates a device interfacing process in an implementation.
Fig. 3 illustrates an operational sequence in an implementation.
Fig. 4 illustrates another industrial automation environment in an implementation.
Fig. 5 illustrates another device interfacing process in an implementation.
Fig. 6 illustrates another device interfacing process in an implementation.
Fig. 7 illustrates another device interfacing process in an implementation.
Fig. 8 illustrates another operational sequence in an implementation.
Fig. 9 illustrates a user interface in an implementation.
Figs. 10A and 10B illustrate another user interface in an implementation.
Fig. 11 illustrates another industrial automation environment in an implementation.
Fig. 12 illustrates another industrial automation environment in an implementation.
Fig. 13 illustrates another industrial automation environment in an implementation.
Fig. 14 illustrates a computing system suitable for implementing the various operational environments, architectures, environments, processes, scenarios, sequences, and frameworks discussed below with respect to the other Figures.

### DETAILED DESCRIPTION

In an industrial automation environment, an operator utilizes a client device with a software tool (e.g., Connected Components Workbench by Rockwell Automation Inc.) to configure various automation devices. For example, one type of automation device is a variable frequency drive, which controls a motor in an industrial system such as a conveyor system. To configure the automation device, the operator makes selections of options of various capabilities of the automation device. The variable frequency drive may have a flying start capability (enabling the initiation of a motor while it is already in motion) available in different modes (e.g., sweep mode and counter-EMF mode). The operator may configure the variable frequency drive by selecting the flying start mode in a user interface of the client device, upon which the client device submits a command request to the automation device to configure the device. To facilitate the display and configuration of various capabilities of automation devices, client devices utilize device profiles containing definitions of the capabilities of the automation devices.

In previous systems, the software tools in client devices came pre-loaded with a substantial number of device profiles for various automation devices, many of which are unutilized. As an example, while there may be forty different models of Direct On Line starters, each having a unique device profile, a particular factory may utilize only three models of Direct On Line starters. A client device may thus unnecessarily maintain many device profiles. Further, poor usability arises from the absence of standardization in defining capabilities across various devices. For example, while two different models of variable frequency drive (e.g., Armor PowerFlex and PowerFlex 755T) may both support the flying start capability, the flying start capability may be defined differently (e.g., with different parameter names, display names, and other metadata) in the associated device profiles. As such, the same capability is displayed differently depending on which device the user is interfacing with. Furthermore, each automation device may require distinct API calls to interact with capabilities due to variations in addressing, syntax, and parameter names.

The present disclosure describes a client device that alleviates the above-described issues by utilizing a schema to dynamically create device profiles for automation devices. The schema contains standardized definitions for the capabilities and associated options for various automation devices, providing consistent representation of capabilities to users.

The client device submits capability requests to automation devices within an industrial system, such as a conveyor system. In response, the automation devices provide a list of their capabilities and corresponding options. For instance, when querying a variable frequency drive, the response may indicate that the variable frequency drive can perform flying starts in sweep mode and DC braking within a range of 0 to 10 Amps, among other capabilities. Each automation device contains a capabilities list that identifies available functions and options, standardized across devices in terms of addressing information, syntax, and parameter names. Consequently, the client device can employ uniform API requests when submitting capabilities requests to any industrial automation device.

After retrieving capability information from an automation device, the client device automatically creates a device profile specific to that device. This device profile includes standardized definitions (retrieved from the schema) for each capability and its options to provide to users configuring devices. For instance, a user may wish to configure the stop control options of a variable frequency drive. In this case, the client device pulls the stop control definitions from the variable frequency drive's profile and displays them in the user interface. The user can then configure the automation device's capabilities via the user interface (e.g., by selecting "coast" as the stop mode to let a motor decelerate naturally). Following the user's submission of the configuration selections, the client device sends a command request to the industrial automation device to apply the configuration selections.

The client device may use a mapping service to provide command requests to automation devices in some implementations. The mapping service maintains addressing information necessary to configure capabilities across various automation devices. It converts generic command requests from the client device into domain-specific commands that are tailored to each target automation device. For instance, a client device might issue a command to configure the flying start capability. Upon receiving this, the mapping service translates it to reflect specific addressing details for the flying start capability in the target automation device, such as linking the "flying-start" parameter name to a particular port and parameter number for a controller in the automation device. Consequently, the mapping service crafts a domain-specific command request that includes the appropriate addressing information, then forwards this domain-specific command request to the automation device.

The features described offer several improvements over existing systems. First, client devices populate device profiles on-the-fly (e.g., upon recognizing a new connected automation device, or upon recognizing that the capabilities of the automation device have been updated), eliminating the need for pre-loaded profiles and thereby reducing storage utilization. Secondly, these profiles standardize capability definitions, which streamlines user interaction by ensuring consistent representation across automation devices. Thirdly, client devices are spared from storing addressing information for each device's capabilities, as this is managed centrally by a mapping service. This is particularly beneficial in environments with multiple client devices, as it eliminates redundant maintenance of addressing information. Fourthly, the streamlined profile creation process accelerates the market readiness of client devices since device profiles do not need to be pre-built in a time-intensive process. Finally, cost-savings may be achieved by reusing capability definitions across different device profiles.

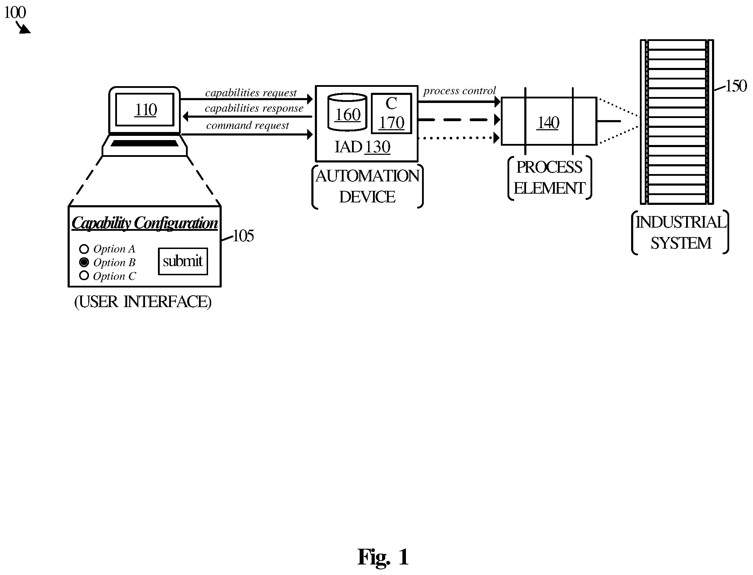

**Fig.** 1 illustrates industrial automation environment 100 in an implementation. Industrial automation environment includes client device 110, user interface 105, automation device 130, process element 140, and industrial system 150. Client device 110 is in communication with automation device 130. Client device 110 displays user interface 105. Automation device 130 is in communication with process element 140. Process element 140 is a component within industrial system 150.

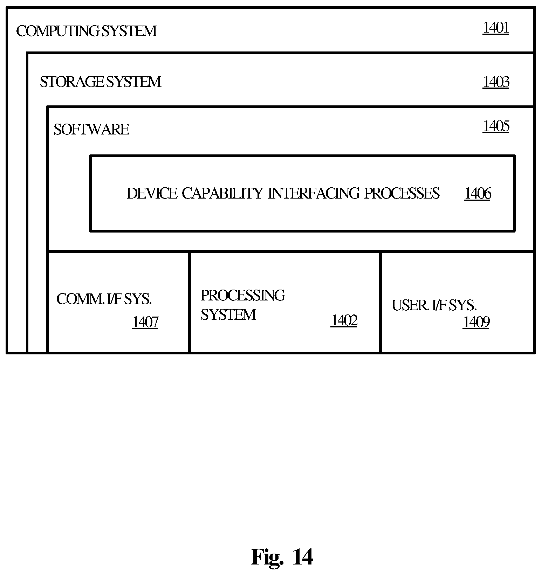

Client device 110 is representative of a device that communicates with automation device 130 and provides users with an interface to configure automation device 130. Client device 110 may be a personal computer, a laptop, a mobile device such as smartphone or tablet, or any other similar device. Client device 110 may be represented by computing system 1401 of Fig. 14.

Client device 110 features software that enables users to configure automation device 130. In some implementations, the software is installed directly on client device 110, while in other implementations, it may operate on a cloud platform. Examples of the software include Connected Components Workbench, Studio 5000, and Natural Language Processing (NLP) device configuration software.

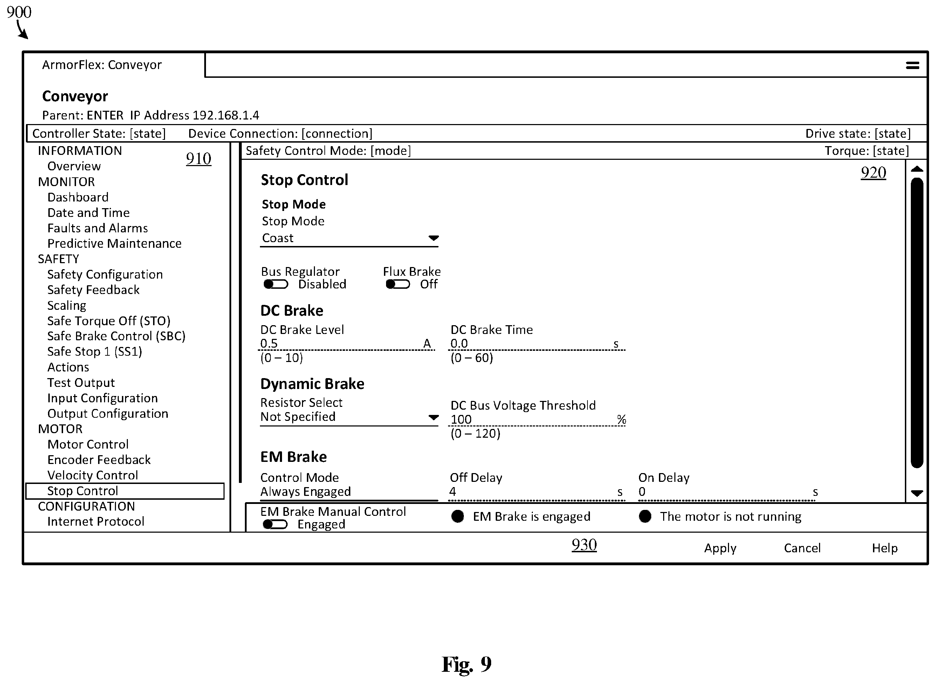

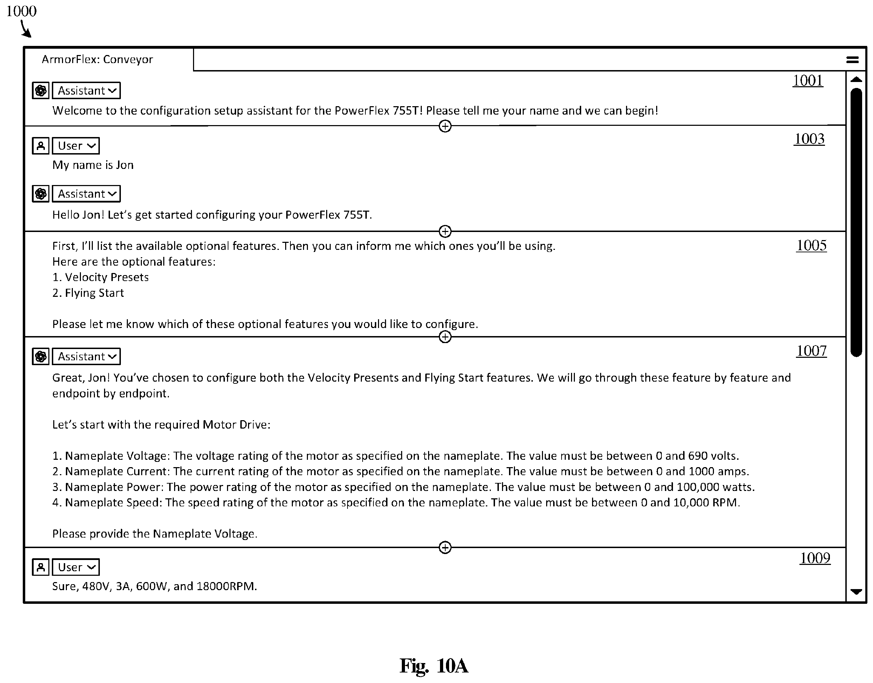

Client device 110 provides user interface 105 for display to users to display the configuration options of automation device 130. To configure automation device 130, the user may select and submit an option of a capability (shown in Fig. 1 as "Option A," "Option B," and "Option C"). For example, where automation device 130 is a motor drive, a user may select a mode (i.e. an option) of the flying start feature (i.e., the capability). It is noted that the layout of user interface 105 is exemplary; user interface 105 may have other arrangements in other embodiments. Additional examples of user interface 105 are represented in user interface 900 of Fig. 9 and user interface 1000 of Figs. 10A-10B, discussed further below.

Client device 110 is configured to submit capabilities requests to automation device130 and to receive capabilities responses from automation device 130, as discussed further in reference to process 200 below. Client device 110 is also configured to submit command requests to automation device 130 to configure the capabilities of automation device 130.

Automation device 130 is an industrial device interfacing with process element 140. Automation device 130 may be, for example, a variable frequency drive, a smart motor controller, a Direct On Line motor controller, a Direct On Line starter, a soft starter, a push button controller, a sensor controller, a switch controller, or any other configurable device involved in the control of an industrial process. For example, where process element 140 is an AC motor, automation device 130 may be a Variable Frequency Drive configured to control the AC motor (including starting, stopping, controlling the speed, controlling the torque, controlling direction, etc.). In another example, where process element 140 is a switch, automation device 130 may be a switch controller configured to turn on and off the switch based on control logic.

Automation device 130 includes controller 170 and capabilities list 160. Controller 170 includes one or more processors and memory storing control logic for controlling process element 140. Controller 170 may be represented by computing system 1401 of Fig. 14. The control logic in controller 170 includes options settings for one or more capabilities of automation device 130. For example, where automation device 130 is a variable frequency drive with a flying start capability, the capability may have a "sweep-mode" option (where the frequency output matches the speed of a free-spinning motor) a "counter-EMF" option (utilizing counter-electromotive force to perform the flying start), or a "disabled" option (in which automation device 130 waits until the motor stops before performing a start). A user may select the configuration option via user interface 105.

Automation device 130 controls process element 140 according to the configuration option selected by the user. The three process control lines between automation device 130 and process element 140 in Fig. 1 represent the different modes of the capability performed according to the configuration selected by the user. In the flying start example, the solid line may represent a flying start performed in sweep mode; the dashed line may represent a flying start performed in counter-EMF mode; and the dotted line may represent the disabled mode, in which the flying start capability has been disabled.

Capabilities list 160 is a list of capabilities and associated options available in automation device 130. Capabilities list 160 is stored in memory, which may be separate from controller 170 or part of controller 170 in various implementations. Capabilities list 160 may be queried by client device 110 via a capabilities request.

Process element 140 is an industrial component controlled by automation device 130 to perform aspects of a process in industrial system 150. Process element 140 may include an AC motor, an DC motor, a servo motor, a stepper motor, a linear actuator, a sensor, a push button, a switch, or any other controlled element in industrial automation environment 100.

Industrial system 150 is a system of components performing an industrial process. While industrial system 150 is illustrated as a conveyor system in Fig. 1, industrial system 150 may be any industrial system with controlled elements, including, for example, assembly lines, robotic systems, pumping stations, mixers, elevator systems, HVAC systems, and the like. Industrial system includes one or more controlled process elements, including process element 140. In the example where industrial system 150 is a conveyor system, process element 140 may be an AC or DC motor driving rollers in the conveyor system. As discussed above, process element 140 is controlled by automation device 130. It is noted that while Fig. 1 shows one automation device 130 and one process element 140 for clarity, industrial automation environment 100 may include multiple automation devices and process elements for performing various processes in industrial system 150.

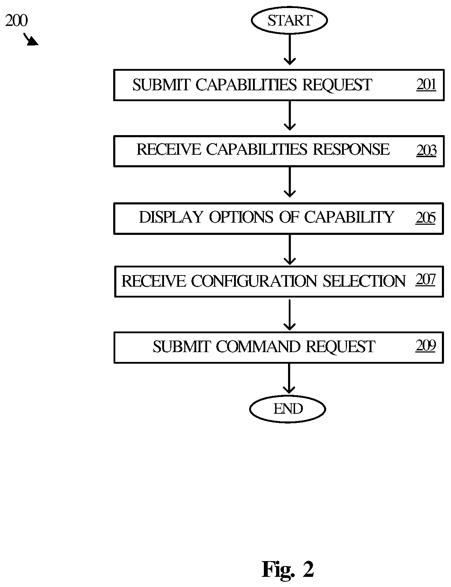

**Fig.** 2 illustrates a device interface process performed by client device 110, represented by process 200. Process 200 is employed by a computing device, an example of which is provided by computing system 1401 of Fig. 14. Process 200 may be implemented in program instructions (software and/or firmware) by one or more processors of the computing device. The program instructions direct the computing device to operate as follows, referring parenthetically to the steps in Fig. 2.

To begin, client device 110 submits a capabilities request to automation device 130 (step 201). The capabilities request is a request for options of a capability (e.g., "flying start") supported by automation device 130. In some implementations, the capabilities request may be a request to discover all capabilities of automation device 130 and the associated options for each capability. The capabilities request is directed to capabilities list 160 of automation device 130. In some implementations, the capabilities request may be initiated automatically (e.g., periodically, or when client device 110 recognizes that automation device 130 is a new connected device, or when client device 110 recognizes that the capabilities of automation device 130 have been updated). In other implementations, the client device 110 may submit the capabilities request in response to a request from a user to discover the options of the capability.

Next, client device 110 receives a capabilities response from automation device 130 (step 203). The capabilities response is an identification of the options of the capability (e.g., "sweep mode", "counter-EMF", or "disabled" in the flying start example). In some implementations, the capabilities response may indicate all available capabilities of automation device 130, and the options associated with each capability. Automation device 130 may return the capabilities response by retrieving an identification of the options of the capability/capabilities from capabilities list 160.

Next, client device 110 displays the options of the capability in user interface 105 (step 205). Step 205 may occur for example, when a user navigates to a capability configuration page on client device 110.

Next, client device 110 receives a configuration selection from a user via user interface 105 (step 207). For example, the user may select and submit "enhanced mode" for the flying start feature via user interface 105.

Next, client device 110 submits a command request to automation device 130 (step 209). The command request is a command to automation device 130 to configure controller 170 according to the option selected by the user. For example, the command request may be a command to set a "flying start" parameter as "counter-EMF." The automation device 130 updates the control logic of controller 170 in response to the command request. During runtime, automation device 130 controls process element 140 in accordance with the configuration selected by the user. In the flying start example, automation device 130 performs enhanced flying starts (i.e., utilizing counter-EMF to perform flying starts on process element 140).

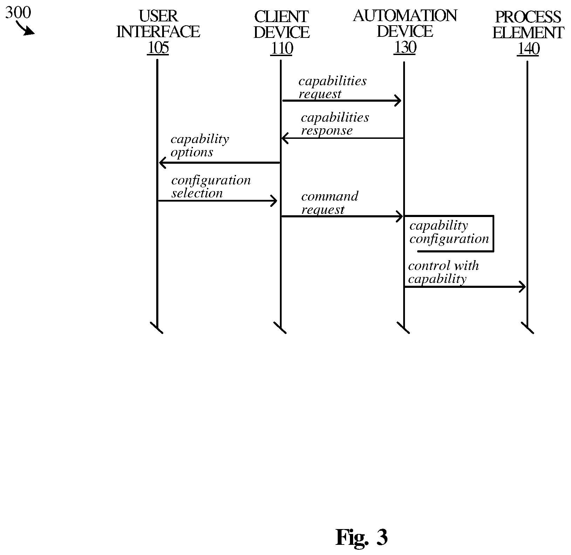

**Fig. 3** illustrates an operational sequence of an application of process 200 in the context of industrial automation environment 100 in an implementation, represented by sequence 300. Sequence 300 includes user interface 105, client device 110, automation device 130, and process element 140.

To begin, client device 110 submits a capabilities request to automation device 130, as discussed in step 201 of process 200. Next, automation device 130 returns a capabilities response to client device 110, as discussed in step 203 of process 200. Client device 110 displays options of a capability in user interface 105, as discussed in step 205 of process 200. Client device 110 receives a configuration selection submitted by a user via user interface 105, as discussed in step 207 of process 200. Client device 110 submits a command request to automation device 130, as discussed in step 209 of process 200. Automation device 130 updates its configuration in accordance with the command request. Updating the configuration may include updating a parameter in control 170 associated with the capability, to reflect the option selected by the user. During runtime, automation device 130 controls process element 140 with the capability, in accordance with the configuration settings. Sequence 300 demonstrates that client device 110 may both discover the capabilities of automation device 130 and configure the capabilities of automation device 130, reducing the need for pre-loaded device profiles in client device 110.

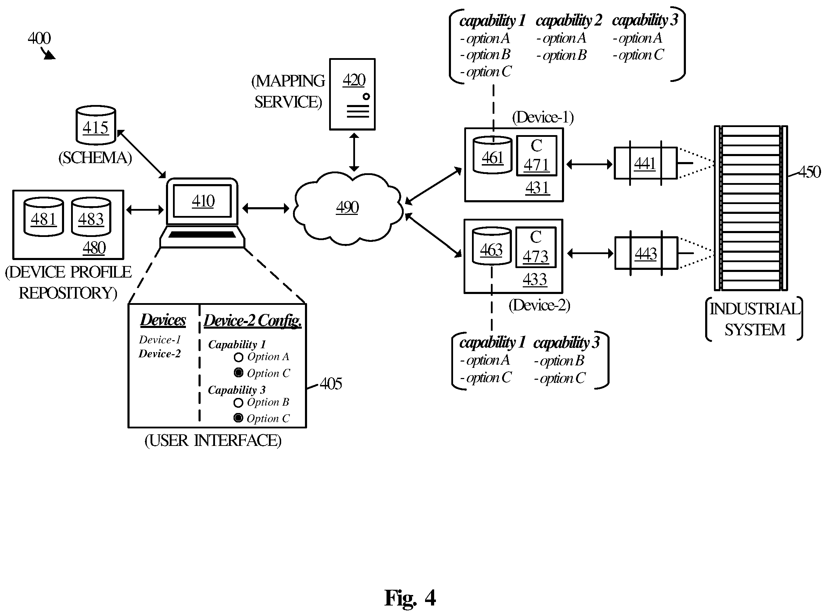

**Fig. 4** illustrates industrial automation environment 400 in an implementation. Industrial automation environment 400 includes client device 410, user interface 405, schema 415, device profile repository 480, mapping service 420, first automation device 431, second automation device 433, first process element 441, second process element 443, industrial system 450, and network 490. While one client device 410 is shown in Fig. 4 for simplicity, industrial automation environment 400 may include multiple client devices in some implementations. Furthermore, while two automation devices 431, 433, and two process elements 441, 443 are shown in Fig. 4 for simplicity, industrial automation environment 400 may include any number of automation devices and process elements.

Client device 410 is in communication with automation devices 431, 433 and mapping service 420 via network 490. Mapping service 420 is in communication with automation devices 431, 433 via network 490. Network 490 may be a Local Area Network (LAN), a Wide Area Network (WAN), or the Internet. In various implementations network 490 may include wired connections, wireless connections, or a combination thereof.

Client device 410 is representative of a device that provides users with an interface to configure automation devices 431, 433. Client device 410 may be a personal computer, a laptop, a mobile device such as smartphone or tablet, or any other similar device. Client device 410 may be represented by computing system 1401 of Fig. 14.

Client device 410 features software that enables users to configure automation devices 431, 433. In some implementations, the software is installed directly on client device 410, while in other implementations, it may operate on a cloud platform. Examples of the software include Connected Components Workbench, Studio 5000, and a Natural Language Processing (NLP) Configuration Assistant.

Client device 410 is capable of both submitting capability requests to obtain capabilities information from automation devices 431, 433, and submitting command requests to configure automation devices 431, 433. Capability requests target the capabilities lists 461, 463 of the respective automation devices 431, 433. In some implementations, these capability requests submitted by client device 410 are uniform API calls, maintaining the same format regardless of the target automation device, even where target automation devices are different components (e.g., where the first automation device 431 is a variable frequency drive while the second automation device 433 is a Direct On Line starter). To facilitate the use of uniform API calls both automation devices 431, 433 (and other automation devices in industrial automation environment 400) use identical format and addressing information for their respective capabilities lists 461, 463. The use of uniform API calls for capabilities requests simplifies system integration and scalability.

In some implementations, client device 410 utilizes mapping service 420 to submit command requests to automation devices 431, 433. The command requests are requests to configure automation devices 431, 433 targeted at their respective controllers 471, 473. It is noted that in some cases, distinct API calls may be required to configure capability options in automation device 431 and automation device 433, even where the same capability is being configured. For example, automation device 431 may be an Armor PowerFlex variable frequency drive, while automation device 433 is a PowerFlex 755T variable frequency drive, both capable of performing flying starts. Even though the two devices have the same capability, different API calls may be required (i.e., domain-specific command requests) to configure the capability due to variations in addressing, syntax, or parameter names. Even in such cases, client device 410 may submit command requests having uniform API calls by utilizing mapping service 420, which transforms generic command requests to domain-specific command requests, allowing client device 410 to configure capabilities across various automation device models without the need to maintain model-specific addressing information. Thus, client device 410 may utilize uniform API calls both for capabilities requests (due to the standardized formats of capabilities lists 461, 463) and command requests (by utilizing mapping service 420).

Schema 415 is a data repository containing standardized definitions for all capabilities across a range of automation devices. Schema 415 is stored in memory of client device 410 in some implementations. In other implementations, schema 415 is stored in memory of a different computer or in the cloud. The definitions for each capability in schema 415 include a listing of all available modes of each capability across a variety of automation devices. For example, while second automation device 433 may be capable of performing flying starts only in "sweep-frequency" mode and "counter-EMF" mode, other automation devices may be capable of other flying start modes (e.g., "frequency-injection," involving monitoring the response of a known frequency signal in a motor). In this example, the definition of the flying start in schema 415 includes "sweep-frequency," "counter-EMF," "frequency-injection," and any other available modes across various automation devices.

In addition to storing all available modes for each capability, schema 415 contains other information about each capability. Where applicable, schema 415 may contain maximum ranges for a capability. For example, schema may include a definition for a direct current (DC) braking capability, which involves injecting direct current into a motor to slow the motor. The definition may include a maximum amperage range (e.g., from 0-15 Amps) available for the DC braking capability. The maximum amperage range may be based, for example, on limitations of the motor (e.g., rated currents) and limitations of motor drives. It is noted that while the schema contains a maximum range, a particular automation device may have a smaller range available for the capability. For example, first automation device 431 may be capable of performing DC braking in a range from 0-10 amps. This more limited range may be listed as a constraint in capabilities list 461 of first automation device 431 as discussed further below.

Schema 415 may further include meta data associated with the capability, including a display name for the capability and its associated modes, which may be displayed in user interface 405 to users viewing the capability. For example, the display name for the "counter-EMF" mode of the flying start capability may be "Counter Electromotive Force (EMF)." The metadata in schema 415 may further include language descriptions of the capability, including a broad description of the capability and descriptions of each available mode. For example, the following description of the "flying-start" capability may be stored as metadata in schema 415: *"Flying start is a control strategy that allows a variable frequency drive to detect the speed and phase of a rotating motor and to synchronize the output frequency and voltage of the drive with the rotating motor before applying torque. This synchronization prevents the application of sudden torque or current surges to the motor, thereby allowing for a smooth transition from free rotation to driven rotation under power from the variable frequency drive. This feature is especially important in industrial applications where processes must be resumed without interruption or stress to mechanical components."* Further, a description of each associated mode for the flying start capability may be separately stored in schema; for example, the description of the "sweep-frequency" mode could be stored in schema 415 as follows: *"This method involves gradually sweeping the output frequency of the variable frequency drive to detect the natural frequency of the rotating motor. The drive monitors feedback from the motor to establish the current operating speed. Once the drive frequency matches the motors rotational frequency, synchronization takes place without causing high inrush currents or mechanical stress."* These descriptions may be provided to users in user interface 405 to provide background information and assist users in configuring automation devices 431, 433.

In many cases, different automation devices both may have the same capability. For example, two different models of variable frequency drive (e.g., Armor PowerFlex and PowerFlex 755T) may both be capable of performing flying starts in sweep-frequency modes. Schema 415 provides standardized definitions for the capabilities such that where various types of automation devices have the same capability, schema 415 contains a single, common definition for the capability. Client device 410 is capable of utilizing the standardized definitions in schema 415 to build device profiles 481, 483 including first device profile 481 and second device profile 483, as discussed further in the description of process 500 below. The utilization of standardized definitions to build device profiles 481, 483 avoids inefficiencies associated with storing distinct definitions for the same capability across various automation device models.

Device profiles repository 480 is a data store for device profiles (including first device profile 481 and second device profile 483) associated with client device 410. Device profile repository 480 is stored in memory of client device 410 in some implementations. In other implementations, schema 415 is stored in memory of a different computer or in the cloud. Device profiles 481, 483 are generated and populated by client device 410 based on capabilities responses received from automation devices 431, 433 and schema 415, as discussed further in the description of process 500 below. While two device profiles 481, 483 are shown in Fig. 4 for simplicity, in other implementations device profile repository 480 may contain any number of device profiles. For example, device profile repository 480 may include a device profile for each automation device in industrial automation environment 400 that client device 410 is connected to or capable of configuring.

Client device 410 provides user interface 405 for display to users, to enable users to configure automation devices 431, 433. In user interface 405, a user may select one of automation devices 431, 433, and select capabilities options with user interface 405. In the example in Fig. 4, the user has selected "Device-2" to configure second automation device 433 in the left panel of user interface 405. The user may configure second automation device 433 in the right panel by selecting options for "Capability 1" and "Capability 2." It is noted that the layout of user interface 405 is exemplary; user interface 405 may have other arrangements in other embodiments. Additional examples of user interface 405 are shown in Figs. 9 and 10A-10B and discussed further below.

Mapping service 420 is representative of a software-based service for providing domain mapping between client devices (including client device 410) and industrial automation devices (including first automation device 431 and second automation device 433). In various implementations, mapping service 420 may operate in various locations. For example, mapping service 420 may operate from a server on premises, in the cloud or even from a computer located within industrial automation devices (e.g., within first automation device 431 or second automation device 433).

Mapping service 420 is configured to receive command requests from client device 410 and translate them to domain-specific command requests to automation device 431, 433. Mapping service 420 contains the addressing information for capabilities of various automation devices. Mapping service 420 may obtain the addressing information by querying capability lists 461, 463, as described further in process 600 below.

Further, mapping service 420 is configured to translate command requests from client device 410 into an industrial protocol supported by automation devices 431, 433. Protocols supported by automation devices 431, 433 (and other automation devices) may vary between different devices, and may include, for example, Common Industrial Protocol (CIP), Profinet, and Modbus. The command requests from client devices 410, on the other hand, may utilize a different protocol than automation devices 431, 433, such as REST HTTP, MQTT, and OPC UA, for example. Translation service 420 is configured to translate the command requests from client device 410 to domain-specific command requests having the industrial protocol supported by the target automation device (e.g., automation device 431, 433).

Automation devices 431, 433 are industrial devices interfacing with process elements 441 and 443, respectively. Automation device 431, 433 may be, for example, variable frequency drives, smart motor controllers, Direct On Line motor controllers, Direct On Line Starters, soft starters, push button controllers, sensor controllers, switch controllers, or any other configurable devices involved in the control of an industrial process. For example, where process element 441 is an AC motor, automation device 431 may be a variable frequency drive configured to control the AC motor (including starting, stopping, controlling the speed, controlling the torque, controlling direction, etc.). In another example, where process element 443 is a switch, automation device 433 may be a switch controller configured to open and close a contactor based on control logic.

Automation devices 431, 433, each include a controller 471, 473 and a capabilities list 461, 463. Controller 471, 473 includes one or more processors and memory storing control logic for controlling respective process element 441, 443. Controllers 471, 473 may be represented by computing system 1401 of Fig. 14. The control logic in each controller 471, 473 includes options settings for one or more capabilities of their respective automation devices 431, 433.

First automation device 431 and second automation device 433 may be distinct components with different available configuration settings in their respective controllers 471, 473. For example, first automation device 431 may be a first model of variable *frequency* drive while second automation device 433 may be a second model of variable frequency drive. In such a case first automation device 431 and second automation device 433 may have a distinct, yet overlapping, set of capabilities. For example, both first automation device 431 and second automation device 433 may have a flying start capability, with first automation device 431 having three modes of the capability (e.g., "sweep frequency," "counter-EMF," and "disabled") while second automation device 431 has only two available modes of the capability (e.g., "sweep-frequency," and "disabled").

First automation device 431 and second automation device 433 each include an associated capabilities list 461, 463. Capabilities lists 461 and 463 are stored in memory, which may be separate from controllers 471, 473 or part of controllers 471, 473 in various implementations. Capabilities lists 461, 463 may be queried by client device 410 via capabilities requests.

Capabilities lists 461, 463 store, in a common predefined format, an identification of the capabilities and associated options of respective automation device 431or 433. Capabilities lists 461, 463 may further include addressing information for configuring each capability within controllers 471, 473. While the capabilities and associated options are utilized by client device 410 to populate device profiles 481, 483, the addressing information is utilized by mapping service 420 to perform domain mapping for command requests from client device 410. The utilization of capabilities lists 461, 463 by client device 410 and mapping service 420 is discussed further below in the description of processes 500, 600, and 700.

Fig. 4 demonstrates how first capabilities list 461 of first automation device 431 may identify a distinct set of capabilities than those identified in second capabilities list 463 of second automation device 433, reflecting the available configurable capabilities of each respective automation device 431, 433. For example, while first capabilities list 461 may list three capabilities ("capability 1," "capability 2" and "capability 3"), second capabilities list 463 may list only two capabilities ("capability 1" and "capability 3") since second automation device 433 may not be equipped to perform "capability 2." Further, the available options (shown as A, B, C, in Fig. 4) for each capability are also included in capabilities lists 461, 463.

Returning to the variable frequency drive example, "capability 1" may be the flying start capability, where first automation device 431 has three options (modes of operation): "sweep-mode," (option A) "counter-EMF" (option B) and "disabled" (option C), where each of these options is identified in first capabilities list 461. Second automation device 433 may also have the flying start capability, but only have two associated options: "sweep-mode" (option A) and "disabled" (option C), where each of these options is stored in second capabilities list 463. Continuing the example, first automation device 431 may have an encoder capability ("capability 2") providing precise control over motor speed based on encoder feedback from a motor (e.g., process element 441). There may be two options for configuring the encoder capability: "enabled" (option A) or "disabled" (option B), where these options are identified in first capabilities list 461. Second automation device 433, however, may not have the encoder capability ("capability 2"). Accordingly, second capabilities list 463 does not identify "capability 2." "Capability 3" may be another capability (such as stop control) first automation device 431 has in common with second automation device 433, with different available options. However, further discussion of the example is omitted for brevity. It is noted that the listing of capabilities in Fig. 4 is for demonstrative purposes; industrial automation devices such as variable frequency drives may have several more configurable capabilities.

The capabilities lists 461, 463 may include specific ranges available for various capabilities in automation devices 431, 433. For example, first capabilities list 461 may identify that first automation device 431 is configurable to perform the DC braking capability in a range from 0-10 amps, while second capabilities list 463 may identify that second automation device 433 is configurable to perform the DC braking capability in a range from 0-8 amps. Capabilities listed in capabilities lists 461, 463, may include, for example, start control, stop control, torque control, acceleration rates, direction control, overload protection, voltage control, and preset speed, among other capabilities of various automation devices,

Capabilities lists 461, 463 provide client device 410 to easily determine device capabilities and build device profiles 481, 483 "on-the-fly." It is noted that while controllers 471, 473, may include different configurable parameters representing capabilities, it is difficult (and may be infeasible) to query controllers 471, 473 for capabilities (e.g., since various parameters are located at different addresses in a given device, and similar capability parameters may utilize different value names and address locations across various devices). Capabilities lists 461, 463 overcome this difficulty by providing a standardized list of capabilities for the device in a specified location. To facilitate the standardization, capabilities lists 461, 463 may both share a common format (including addressing information and syntax), even where automation device 431 is a different component or model from automation device 433. Furthermore, additional automation devices in industrial automation environment 400 (not depicted for brevity) may also contain capabilities lists with the same common format. This provides client device 410 with the ability to submit capabilities with uniform API formats regardless of which automation device the capabilities request is being provided to.

In addition to an identification of the capabilities and associated options, capabilities lists 461, 463 may include addressing information for each capability of respective automation devices 431, 433. The addressing information may include, for example, a port number and a parameter number associated with each capability. This addressing information enables the mapping service 420 to perform domain-mapping for command requests, as discussed further in the descriptions of processes 500, 600, and 700 below.

Capabilities lists 461, 463 are configured to dynamically update to reflect the capabilities of automation devices 431, 433, which may vary over time. These variations may result, for example from changes in selected control modes, from updates to firmware adding or enhancing capabilities in automation devices 431, 433, or from the addition or removal of optionally connected hardware. For example, whether a variable frequency drive supports the "encoder" capability (providing the ability to calculate motor speed based on sensor input) may depend on whether an encoder card is installed in the variable frequency drive. Accordingly, when controllers 471, 473 recognize the addition or removal of optionally connected hardware (such as an encoder card) to respective automation devices 431, 433, they automatically update their respective capabilities list 461, 463 (e.g., by adding or removing "encoder" from the list of capabilities). Additionally, when controllers 471, 473 recognize that a control mode of the associated automation device 431 or 433 has been updated, controllers 471, 473 automatically update the respective capabilities list 461 or 463 to reflect any changes resulting from the change in control modes. In the variable frequency drive example, the "Vector Velocity" control mode may support a torque control capability, while the "Volts/Hertz" control mode may not support the torque control capability. Accordingly, when controllers 471, 473 recognize that the control mode has been updated (by client device 410 or by a programmable logic controller, for example), it may update its respective capability list 461, 463 to either add or remove "torque control" from the list of capabilities. Capabilities lists 461, 463 may be dynamically updated in this manner during runtime. For example, if a programmable logic controller changes the control mode of automation device 431 or 433 during runtime, the respective controller 471 or 473 may automatically update capabilities lists 461 or 463 to reflect any change in capabilities resulting from the change (e.g., by adding or removing the identification of the "torque control" capability). Since the display of capabilities to users is based in part on capabilities lists 461, 463 (as described in process 500 below) the dynamic updating of capabilities lists 461, 463 allows users to view accurate and real-time information about the current capabilities of automation devices 431, 433.

Process elements 441, 443 are industrial components controlled by automation devices 431, 433 to perform aspects of a process in industrial system 450. Process elements 441, 443 may include AC motors, DC motors, servo motors, stepper motors, linear actuators, sensors, push buttons, switches, or any other controlled elements in industrial automation environment 400.

Industrial system 450 is a system of components performing industrial processes. While industrial system 450 is illustrated as a conveyor system in Fig. 4, industrial system 450 may be any industrial system with controlled elements, including, for example, assembly lines, robotic systems, pumping stations, mixers, elevator systems, HVAC systems, and the like. Industrial system 450 includes multiple controlled process elements, including process elements 441, 443. In the example where industrial system 450 is a conveyor system, process element 441, 443 may be AC or DC motors driving rollers in the conveyor system. As discussed above, process elements 441, 443 are controlled by automation devices 431, 433. It is noted that while Fig. 4 shows two automation devices 431, 433 and two process elements 441, 443 for clarity, industrial automation environment 400 may include a greater number of automation devices and process elements for performing various processes in industrial system 450.

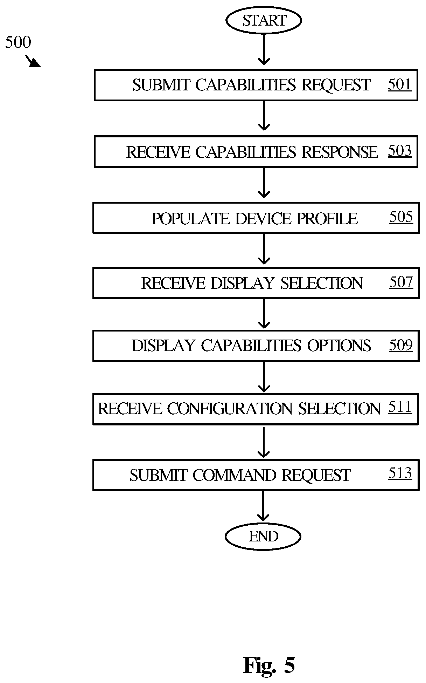

**Fig. 5** illustrates a device interface process performed by client device 410, represented by process 500. Process 500 is employed by a computing device, an example of which is provided by computing system 1401 of Fig. 14. Process 500 may be performed in conjunction with process 600 (performed by mapping service 420) and process 700 (performed by first automation device 431 or second automation device 433) as described below. Process 500 may be implemented in program instructions (software and/or firmware) by one or more processors of the computing device. The program instructions direct the computing device to operate as follows, referring parenthetically to the steps in Fig. 5.

To begin, client device 410 submits a capabilities request to automation device 431 or 433 (step 501). The capabilities request is a request for options of a capability (e.g., "flying start") supported by automation device 431 or 433. In some implementations, the capabilities request may be a request to discover all capabilities of automation device 431 or 433 and the associated options for each capability. The capabilities request is directed to capabilities list 461 or 463 of respective automation device 431 or 433. In some implementations, the capabilities request may be initiated automatically (e.g., periodically, or when client device 410 recognizes that automation device 431 or 433 is a new connected device, or when client device 410 recognizes that the capabilities of automation device 431 or 433 have been updated). In other implementations, the client device 410 may submit the capabilities request in response to a request from a user to discover or view the options of the capability.

Next, client device 410 receives a capabilities response from automation device 431 or 433 (step 503). The capabilities response is an identification of the options of the capability (e.g., "sweep mode", "enhanced", or "disabled" in the flying start example). In some implementations, the capabilities response may indicate all available capabilities of automation device 431 or 433, and the options associated with each capability. Automation device 431 or 433 may return the capabilities response by retrieving an identification of the options of the capability/capabilities from capabilities list 461 or 463, as discussed in process 700 below.

Next, client device 410 populates device profile 481 or 483 (step 505). For each capability and associated option received in the capabilities response, client device 410 retrieves the definitions for the capabilities and options from schema 415 and populates device profile 481 or 483 with the definitions. It is noted that capabilities lists 461, 463 in automation devices 431, 433 may contain only simple identifications of capabilities and options (e.g. "sweep-mode") while schema 415 may contain more robust definitions of each capability, including display names, descriptions, as discussed in the description of Fig. 4 above. Accordingly, storage resource usage in automation devices 431, 433 is optimized, since capabilities lists identify capabilities briefly, while schema 415 contains robust definitions of the capabilities that are used to build device profiles 481, 483.

Next, client device 410 receives a display selection from a user via user interface 405 (step 507). The display selection may be a selection from a user to view a specific capability in industrial system 450, or the capabilities of a particular device. In the example illustrated in Fig. 4, the user has selected "Device-2" to view configuration options for second automation device 433.

Next, client device 410 displays the options of the capability in user interface 405 (step 509). Fig. 4 demonstrates the display of options for "Capability 1" and "Capability 2" in user interface 405.

Next, client device 410 receives a configuration selection from a user via user interface 405 (step 511). In the example of Fig. 4, the user has selected "option C" of "Capability 1," which may be, for example, a selection to disable the flying start feature in second automation device 433.

Next, client device 410 submits a command request to automation device 431 or 433 via mapping service 420 (step 513). The command request is a command to configure controller 471 or 473 according to the option selected by the user. For example, the command request may be a command to set disable the parameter associated with flying start to "disabled" in second automation device 433. The mapping service 420 receives the command request and performs domain mapping on the command request, as discussed in process 600 below.

Process 500 demonstrates that client device 410 builds device profiles for automation devices 431, 433 on "on the fly" based on capabilities lists 461, 463, allowing the configuration of automation devices without the necessity of having pre-loaded device profiles. This results in a reduction in the use of storage resources as compared to previous systems, since a multitude of unused device profiles are not stored in client device 410. Further, device profiles are built automatically using the standardized definitions of schema 415. This reduces the time used to build device profiles 481, 483 as compared to previous systems, in which device profiles were individually developed for various automation devices and often used varying definitions for the same capabilities.

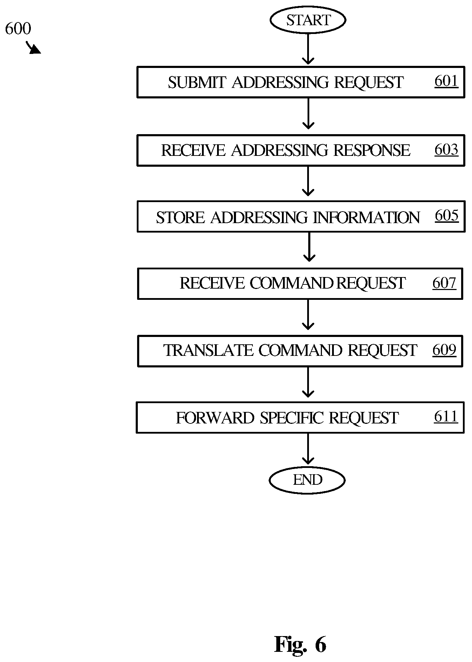

**Fig. 6** illustrates a device interface process performed by mapping service 420, represented by process 600. Process 600 is employed by a computing device, an example of which is provided by computing system 1401 of Fig. 14. Process 600 may be performed in conjunction with process 500 (performed by client device 410) and process 700 (performed by first automation device 431 or second automation device 433) as described herein. Process 600 may be implemented in program instructions (software and/or firmware) by one or more processors of the computing device. The program instructions direct the computing device to operate as follows, referring parenthetically to the steps in Fig. 6.

To begin, mapping service 420 submits an addressing request to automation device 431 or 433 (step 601). The addressing request is a request directed to capabilities list 461 or 463 to discover addressing information (e.g., port number and parameter number within controller 471 or 473) for configuring the respective automation device's capabilities.

Next, mapping service 420 receives an addressing response from automation device 431 or 433 (step 603). The addressing response includes the addressing information used for configuring the capabilities of automation device 431 or 433 (e.g., the port number and parameter number within controller 471, 473).

Next, mapping service 420 stores the addressing information (step 605). The stored addressing information provides mapping service 420 to perform domain mapping for command requests received from client device 410.

Next, mapping service 420 receives a command request from automation device 431 or 433 (step 607). The command request may be the generic command request described in step 513 of process 500 above.

Next, mapping service 420 translates the generic command request to a domain-specific command request (step 609). Mapping service 420 utilizes the stored addressing information for automation device 431 or 433 to perform the translation. Specifically, while the generic command request may identify a capability of automation device 431 or 433 to configure, it may not include the necessary addressing information in controllers 471 or 473 to configure the capability. The domain-specific command request (generated in the translation by mapping service 420) includes the necessary addressing information for respective automation device 431 or 433. In step 609, mapping service 420 may translate an indicated capability (e.g. "flying-start") from the generic command request to the addressing information for the capability in controller 471 or 473 (e.g., the port number and parameter number for the capability).

Next, mapping service 420 forwards the domain-specific command request to automation device 431 or 433 (step 611). The domain-specific command request may be the command request received by automation device 431 or 433 in step 713 of process 700 described below.

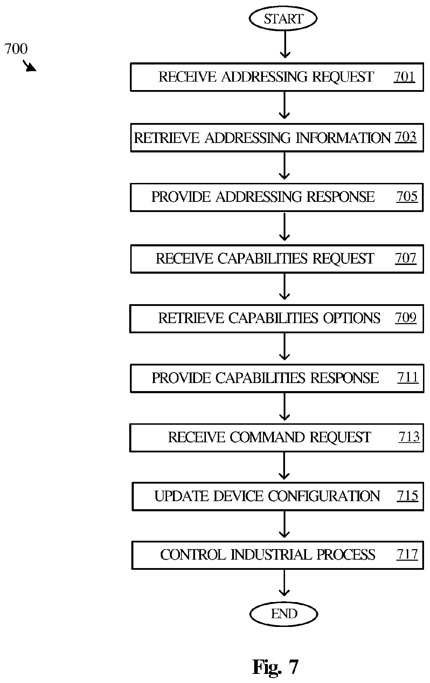

**Fig. 7** illustrates a device interface process performed by automation device 431 or 433, represented by process 700. Process 700 is employed by a computing device, an example of which is provided by computing system 1401 of Fig. 14. Process 700 may be performed in conjunction with process 500 (performed by client device 410) and process 600 (performed by mapping service 420) as described herein. Process 700 may be implemented in program instructions (software and/or firmware) by one or more processors of the computing device. The program instructions direct the computing device to operate as follows, referring parenthetically to the steps in Fig. 7.

In steps 701-705 of process 700, automation device 431 or 433 interfaces with mapping service 420 to provide addressing information. First, automation device 431 or 433 receives an addressing request from mapping service 420 (step 701). The addressing query may be the addressing request from step 601 of process 600 described above in relation to mapping service 420. Next, automation device 431 or 433 retrieves addressing information from capabilities list 461 or 463 (step 703). Next, automation device 431 or 433 provides an addressing response to mapping service 420 (step 705). The addressing response includes the addressing information retrieved in step 703 and may be the addressing response of step 603 of process 600 described above in relation to mapping service 420.

In steps 707-711 of process 700, automation device 431 or 433 interfaces with client device 410 to provide capabilities information. Steps 707-711 may occur before, during, or after steps 701-705. In step 707, automation device 431 or 433 receives a capabilities request from client device 410. The capabilities request may be the capabilities request submitted by client device 410 in step 501 of process 500 described above. Automation device 431 or 433 retrieves capabilities options from capabilities list 461 or 463 (step 709). Next, automation device 431 or 433 provides the capabilities response to client device 410 (step 711). The capabilities response may be the capabilities response received by client device 410 in step 503 in process 500 described above.

Once mapping service 420 has the addressing information (provided to mapping service as described in steps 701-705) and client device has the capabilities information (provided in steps 707-711) client device 410 may configure client device with command requests submitted via mapping service 420. In step 713, automation device 431 or 433 receives a domain specific command request from mapping service 420. The domain-specific command request may be the domain-specific command request described in process 600 with respect to mapping service 420 above. Next, automation device 431 or 433 updates the device configuration based on the command request (step 715). Specifically, a parameter of controller 471 or 473 may be updated based on the command request. For example, a parameter associated with the "flying start" feature in a variable frequency drive may be set to "sweep-mode" or "disabled" within controller 471 or 473.

Next, automation device 431 or 433 controls an industrial process in accordance with the configuration settings in controller 471 or 473 (step 717). For example, automation device 431 or 433 may initiate flying starts on process element 441 or 443 based on the flying start parameter in the configuration settings.

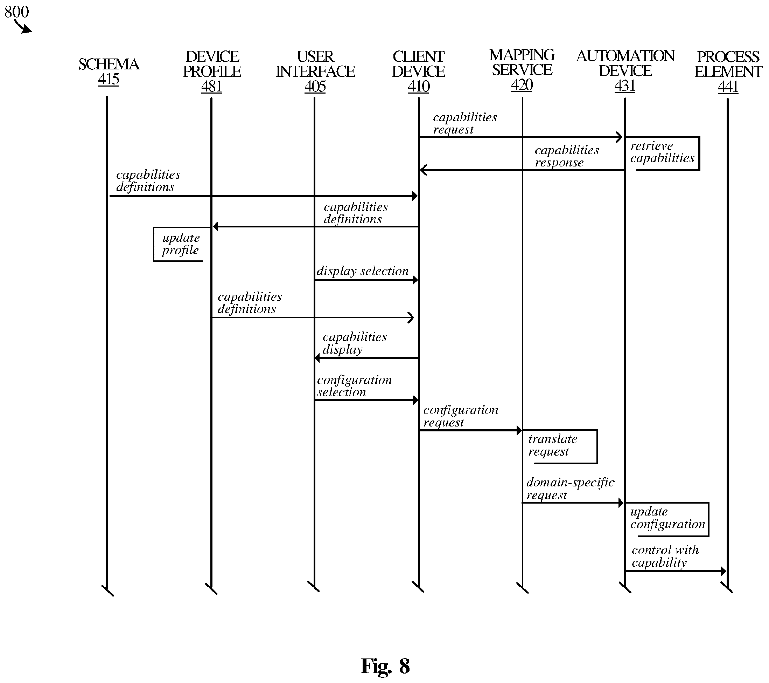

**Fig. 8** illustrates an operational sequence of an application of processes 500, 600, and 700, in the context of industrial automation environment 400 in an implementation, represented by sequence 800. Sequence 800 includes schema 415, device profile 481, user interface 405, client device 410, mapping service 420, automation device 431, and process element 441.

To begin, client device 410 submits a capabilities request to automation device 431 (see step 501 of process 500). Industrial automation device 431 or 433 retrieves capabilities from capabilities list 461 and returns a capabilities response (see steps 709 and 711 of process 700). Client device 410 then retrieves capabilities definitions from schema 415 and adds the capabilities definitions to device profile 481, which is populated with the definitions (see step 505 of process 500). Client device 410 receives a display selection via user interface 405 (see step 507 of process 500). Client device 410 retrieves the capabilities from device profile 481 and displays the capabilities in user interface 405 (see step 509 of process 500). Client device 410 receives a configuration selection from a user via user interface 405 (see step 511 of process 500). Client device 410 submits a command request to mapping service 420 (see step 513 of process 500). Mapping service 420 translates the request to a domain-specific request (see step 609 of process 600). Mapping service 420 forwards the domain-specific request to automation device 431 (see step 611 of process 600). Industrial automation device 431 updates its configuration settings based on the command request (see step 715 of process 700). Industrial automation device 431 controls process element 441 with the capability (see step 717 of process 700).

**Fig. 9** illustrates user interface 900 in an implementation. User interface 900 may be generated and displayed to users by a client device, such as client device 110 of Fig. 1 or client device 410 of Fig. 4. User interface 900 may be representative of user interface 105 in Fig. 1 or user interface 405 in Fig. 4 in various implementations.

User interface 900 includes first pane 910 and second pane 920. First pane 910 shows various configuration settings available for an automation device (which may be automation device 130 of Fig. 1 or automation device 431, 433 of Fig. 4) in conveyor system (which may be representative of industrial system 150 of Fig. 1 or industrial system 450 of Fig. 4). A user viewing user interface 900 may select a category (e.g., "Safety Configuration," "Motor Control," or "Stop Control") in first pane 910 to view capabilities options for the automation device. Once the user makes a selection in first pane 910, the client device surfaces various capabilities options in second pane 920. The displaying the capabilities options in second pane 920 may be representative of the displaying the capabilities options in step 509 of process 500. In the example of Fig. 9, the user has selected "Stop Control." In response, the client device has surfaced various configuration options for Stop Control in second pane 920. The client device may display the capabilities options in second pane 920 by retrieving them from a device profile associated with the automation device, such as device profiles 481 or 483 of Fig. 4.

Second pane 920 shows various configuration settings available for the automation devices (e.g., automation device 130 of Fig. 1 or automation device 431 or 433 of Fig. 4) in industrial system 150 or 450. In the example in Fig. 9, the user has selected various configuration settings (e.g., "Coast" is selected for the "Stop Mode", "Bus Regulator" has been set to "Disabled," "Flux Brake" has been set to "Off," etc.). Once the user has made any desired changes, the user may select "Apply" in command bar 930 at the bottom of user interface 900. The user's selection of "Apply" may be representative of receiving a configuration selection in step 511 of process 500, described above. Once the configuration selection is received, the client device provides a command requests to the automation device, as described in step 513 of process 500. Alternatively, the user may select "cancel" in command bar 930 to cancel any selections made in second pane 920. The user may also select "help" in command bar 930 to view descriptions of the capabilities. Upon receiving a user's selection of "help," the client device may retrieve descriptions of the capabilities from the associated device profile (such as device profile 481 or 483 of Fig. 4) and display the descriptions to the user in user interface 900.

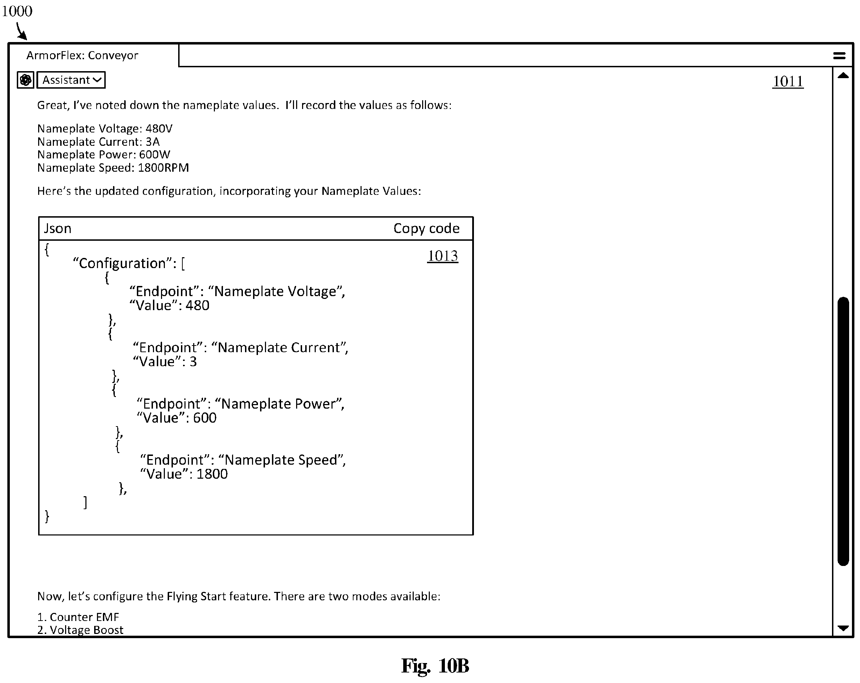

**Figs. 10A** **and** **10B** illustrate user interface 1000 in another implementation. User interface 1000 may be generated and displayed to users by a client device, such as client device 110 of Fig. 1 or client device 410 of Fig. 4. User interface 1000 may be representative of user interface 105 in Fig. 1 or user interface 405 in Fig. 4 in various implementations.

User interface 1000 is representative of a user interface where the software tool running on the client device (e.g. client device 110 of Fig. 1 or 410 of Fig. 4) is a Natural Language Processing (NLP) configuration assistant. The NLP configuration assistant utilizes an NLP artificial intelligence model to interpret user requests and generate natural language responses. Utilizing the NLP configuration assistant, a user may type in configuration requests to configure automation devices (e.g., automation device 130 of Fig. 1 or automation devices 431 or 433 of Fig. 4) which may be understood as the configuration selections described above.

In the example provided in Figs. 10A and 10B, the user is configuring a PowerFlex 755T (which may be, for example, automation device 130 of Fig. 1 or automation device 431, 433 of Fig. 4). The client device (e.g., client device 110 of Fig 1 or client device 410 of Fig. 4) surfaces dialog generated by the NLP configuration assistant in user interface 1000, and receives text inputs from the user. In dialog box 1001 the NLP configuration assistant begins the dialog by indicating that the PowerFlex 755T is being configured and requesting the user's name. In dialog box 1003, the user provides his name. In dialog box 1005, the NLP configuration assistant provides the configurable capabilities of the PowerFlex 755T (Velocity Presets and Flying Starts). These may be retrieved from a device profile associated with the PowerFlex 755T, such as device profile 481 or 483 of Fig. 4. In dialog box 1007, the NLP configuration assistant has received a user selection to configure both features. The NLP configuration assistant has provided available ranges for the Nameplate Voltage, Nameplate Current, Nameplate Power, and Nameplate Speed. The NLP configuration assistant may provide these ranges by retrieving them from the device profile (e.g., device profile 481 or 483 of Fig. 4), according to some embodiments. In dialog box 1009, the user has provided configuration inputs for the Nameplate Voltage, Nameplate Current, Nameplate Power, and Nameplate Speed. The user's input in dialogue box 1009 may be understood as the receiving of the configuration selection in step 511 of process 500 described above. In dialogue box 1011, the NLP assistant has indicated the recorded values based on the user's input in dialog box 1009. The NLP has also displayed the configuration code 1013, which may be representative of the command request provided to the automation device in step 513 of process 500 described above.

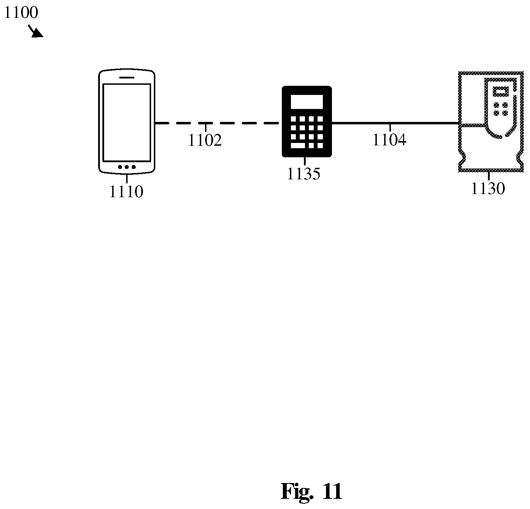

**Fig. 11** illustrates industrial automation environment 1100 in an implementation. Industrial automation environment 1100 includes client device 1110 (which may be, for example client device 110 of Fig. 1 or client device 410 of Fig. 4), human interface module 1135, and automation device (which may be, for example, automation device 130 of Fig. 1 or automation device 431, 433 of Fig. 4). Client device 1110 communicates with human interface module 1135 via wireless connection 1102 (which may be, for example, Bluetooth of Wi-Fi direct). Human interface module 1135 communicates with automation device 1130 via wired connection 1104 (which may be, for example, a USB connection). Fig. 11 illustrates that client device 1110 may interface with automation device 1130 by connecting wirelessly to human interface module 1135. Client device 1110 may interface with automation device 1130 via human interface module 1135 to obtain capabilities information and submit command requests, in accordance with the processes described above.

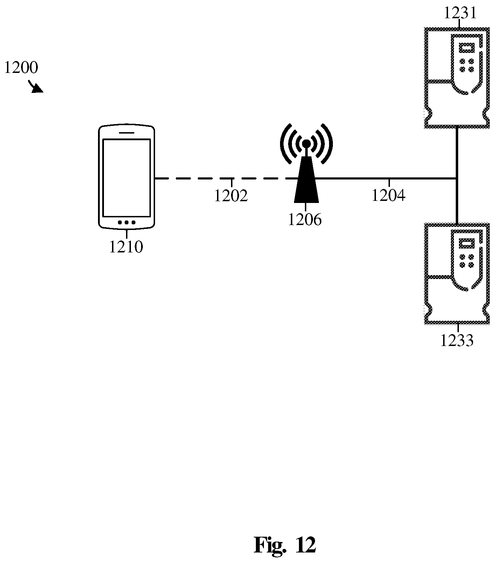

**Fig. 12** illustrates industrial automation environment 1200 in an implementation. Industrial automation environment 1200 includes client device 1210 (which may be, for example client device 110 of Fig. 1 or client device 410 of Fig. 4), access point 1206 (which may be, for example a local network router), and automation devices 1231, 1233 (which may be, for example, automation device 130 of Fig. 1 or automation device 431, 433 of Fig. 4). Client device 1210 communicates with access point 1206 via wireless connection 1202 (which may be, for example, a Wi-Fi connection). Access point 1206 communicates with automation devices 1231, 1233 via wired connection 1204 (which may include, for example, ethernet cables, coaxial cables, fiber optic cables, or a combination thereof). Client device 1210 may interface with automation devices 1231, 1233 to obtain capabilities information and submit command requests, in accordance with the processes described above.

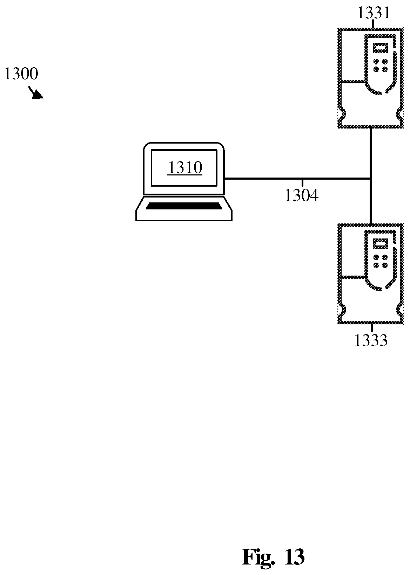

**Fig. 13** illustrates industrial automation environment 1300 in an implementation. Industrial automation environment 1300 includes client device 1310 (which may be, for example client device 110 of Fig. 1 or client device 410 of Fig. 4) and automation devices 1331, 1333 (which may be, for example, automation device 130 of Fig. 1 or automation device 431, 433 of Fig. 4). Client device 1310 communicates with automation devices 1331, 1333 via wired connection 1304 (which may include, for example, ethernet cables, coaxial cables, fiber optic cables, or a combination thereof). Client device 1310 may interface with automation devices 1331, 1333 to obtain capabilities information and submit command requests, in accordance with the processes described above.

It is noted that, while Figs. 11-13 show various examples of network configurations in industrial automation environments, other network configurations in industrial automation environments also fall within the scope of this disclosure.

**Fig. 14** illustrates computing system 1401, which is representative of any system or collection of systems in which the various applications, processes, services, and scenarios disclosed herein may be implemented. Examples of computing system 1401 include, but are not limited to server computers, web servers, cloud computing platforms, and data center equipment, microcontrollers, micro-controller units (MCUs), as well as any other type of physical or virtual server machine, container, and any variation or combination thereof. (In some examples, computing system 1401 may also be representative of desktop and laptop computers, tablet computers, and the like.)

Computing system 1401 may be implemented as a single apparatus, system, or device or may be implemented in a distributed manner as multiple apparatuses, systems, or devices. Computing system 1401 includes, but is not limited to, processing system 1402, storage system 1403, software 1405, communication interface system 1407, and user interface system 1409. Processing system 1402 is operatively coupled with storage system 1403, communication interface system 1407, and user interface system 1409.

Processing system 1402 loads and executes software 1405 from storage system 1403. Software 1405 includes and implements device capability interfacing processes 1406, which are representative of the processes discussed with respect to the preceding figures, such as processes 200, 500, 600, and 700. When executed by processing system 1402, software 1405 directs processing system 1402 to operate as described herein for at least the various processes, operational scenarios, and sequences discussed in the foregoing implementations. Computing system 1401 may optionally include additional devices, features, or functionality not discussed for purposes of brevity.

Referring still to Fig. 14, processing system 1402 may include a microprocessor and other circuitry that retrieves and executes software 1405 from storage system 1403. Processing system 1402 may be implemented within a single processing device but may also be distributed across multiple processing devices or sub-systems that cooperate in executing program instructions. Examples of processing system 1402 include general purpose central processing units, microcontroller units, graphical processing units, application specific processors, integrated circuits, application specific integrated circuits, and logic devices, as well as any other type of processing device, combinations, or variations thereof.

Storage system 1403 may comprise any computer readable storage media readable by processing system 1402 and capable of storing software 1405. Storage system 1403 may include volatile and nonvolatile, removable, and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal. Storage system 1403 may be implemented as a single storage device but may also be implemented across multiple storage devices or sub-systems co-located or distributed relative to each other. Storage system 1403 may comprise additional elements, such as a controller capable of communicating with processing system 1402 or possibly other systems.

Software 1405 (including device capability interfacing processes 1406) may be implemented in program instructions and among other functions may, when executed by processing system 1402, direct processing system 1402 to operate as described with respect to the various operational scenarios, sequences, and processes illustrated herein. For example, software 1405 may include program instructions for implementing device capability interfacing processes and procedures as described herein.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for", but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.
**The following is a list of further preferred embodiments of the invention:**
Embodiment 1. A method for interfacing between client devices and industrial automation devices in industrial automation environments, the method comprising, by a client device:
   submitting a capabilities request to an industrial automation device for options of a capability supported by the industrial automation device, the industrial automation device being configured to control a process element in an industrial automation environment;
   receiving a capabilities response from the industrial automation device indicative of one or more options of the capability;
   displaying the one or more options of the capability in a user interface;
   receiving, via the user interface, a configuration selection of one of the one or more options; and
   submitting, to the industrial automation device, a command request to configure the capability based on the configuration selection.
Embodiment 2. The method of embodiment 1, wherein the capability is a first capability, and wherein the method further comprises, by the client device:
   in response to receiving the capabilities response, populating a device profile with the one or more options of the first capability, wherein the device profile comprises plurality of capabilities of the industrial automation device including the first capability and the one or more options of the first capability, and
   wherein the displaying the one or more options of the first capability comprises retrieving the one or more options of the first capability from the device profile for display.
Embodiment 3. The method of embodiment 2 wherein the populating the device profile comprises:
   retrieving, for each of the one or more options, an option definition from a schema, wherein the schema comprises definitions for all options of the capability available across multiple devices, wherein the one or more options is a subset of the all options, and
   binding each retrieved option definition to the device profile.
Embodiment 4. The method of embodiment 1, wherein the submitting the command request to the industrial automation device comprises submitting the command request via a mapping service, and wherein the method further comprises, by the mapping service:
   receiving the command request,
   translating the command request to a domain-specific command request adapted to the industrial automation device, and
   forwarding the domain-specific command request to the industrial automation device.
Embodiment 5. The method of embodiment 4 further comprising, by the mapping service:
   submitting, to the industrial automation device, an addressing request for addressing information associated with the capability;
   receiving, from the industrial automation device, an addressing response having the addressing information associated with the capability; and
   storing the addressing information, wherein the translating the command request comprises utilizing the addressing information to generate the domain-specific command request.
Embodiment 6. The method of embodiment 5 further comprising, by the industrial automation device:
   receiving the addressing request;
   retrieving the addressing information from a capabilities list maintained in the industrial automation device; and
   providing, to the mapping service, the addressing response.
Embodiment 7. The method of embodiment 1 further comprising, by the industrial automation device:
   receiving the capabilities request from the client device;
   retrieving identifications of the one or more options from a capabilities list maintained in the industrial automation device; and
   providing the capabilities response to the client device, the capabilities response comprising the identifications of the one or more options.
Embodiment 8. The method of embodiment 1, wherein the industrial automation device comprises a motor control device, and wherein the capability comprises one of start control, stop control, torque control, acceleration rates, direction control, overload protection, voltage control, and preset speed.
Embodiment 9. A system for interfacing between client devices and industrial automation devices in industrial automation environments comprising:
   a client device comprising one or more first processors and one or more memories operably coupled to the one or more first processors, the one or more memories having stored thereon first software instructions, that upon execution by the one or more first processors, cause the one or more first processors to:
   submit a capabilities request to an industrial automation device for options of a capability supported by the industrial automation device;
   receive a capabilities response from the industrial automation device indicative of one or more options of the capability;
   display the one or more options of the capability in a user interface;
   receive, via the user interface, a configuration selection of one of the one or more options; and
   submit, to the industrial automation device, a command request to configure the capability based on the configuration selection.
Embodiment 10. The system of embodiment 9, wherein the capability is a first capability, and wherein the first software instructions comprise further instructions, that upon execution by the one or more first processors, cause the one or more first processors to:
   in response to receiving the capabilities response, populate a device profile with the one or more options of the first capability, wherein the device profile comprises plurality of capabilities of the industrial automation device including the first capability and the one or more options of the first capability, and
   wherein the displaying the one or more options of the first capability comprises retrieving the one or more options of the first capability from the device profile for display.
Embodiment 11. The system of embodiment 10, wherein the populating the device profile comprises:
   retrieving, for each of the one or more options, an option definition from a schema, wherein the schema comprises definitions for all options of the capability available across multiple devices, wherein the one or more options is a subset of the all options, and
   binding each retrieved option definition to the device profile.
Embodiment 12. The system of embodiment 9 further comprising a mapping service, wherein the submitting the command request to the industrial automation device comprises submitting the command request via the mapping service, the mapping service comprising one or more second processors and one or more second memories operably coupled to the one or more second processors, the one or more second memories having second software instructions stored thereon that, upon execution by the one or more second processors, cause the one or more second processors to:
   receive the command request,
   translate the command request to a domain-specific command request adapted to the industrial automation device, and
   forward the domain-specific command request to the industrial automation device.
Embodiment 13. The system of embodiment 12 wherein the second software instructions comprise further instructions, that upon execution by the one or more second processors, cause the one or more second processors to:
   submit, to the industrial automation device, an addressing request for addressing information associated with the capability;
   receive, from the industrial automation device, an addressing response having the addressing information associated with the capability; and
   store the addressing information, wherein the translating the command request comprises utilizing the addressing information to generate the domain-specific command request.
Embodiment 14. The system of embodiment 13 further comprising the industrial automation device, the industrial automation device comprising one or more third processors and one or more third memories operable coupled to the one or more third processors, the one or more third memories having third software instructions stored thereon that, upon execution by the one or more third processors, cause the one or more third processors to:
   receive the addressing request;
   retrieve the addressing information from a capabilities list maintained in the industrial automation device; and
   provide, to the mapping service, the addressing response.
Embodiment 15. The system of embodiment 9 further comprising the industrial automation device, the industrial automation device comprising one or more third processors and one or more third memories operable coupled to the one or more third processors, the one or more third memories having third software instructions stored thereon that, upon execution by the one or more third processors, cause the one or more third processors to:
   receive the capabilities request from the client device;
   retrieve identifications of the one or more options from a capabilities list maintained in the industrial automation device; and
   provide the capabilities response to the client device, the capabilities response comprising the identifications of the one or more options.
Embodiment 16. The system of embodiment 9 further comprising the industrial automation device, wherein the industrial automation device comprises a motor control device, and wherein the capability comprises one of start control, stop control, torque control, acceleration rates, direction control, overload protection, voltage control, and preset speed.
Embodiment 17. A computer-readable storage media device having program instructions stored thereon to interface with industrial automation devices in industrial automation environments, wherein the program instructions, upon execution by one or more processors, cause the one or more processors to:
   submit a capabilities request to an industrial automation device for options of a capability supported by the industrial automation device;
   receive a capabilities response from the industrial automation device indicative of one or more options of the capability;
   display the one or more options of the capability in a user interface;
   receive, via the user interface, a configuration selection of one of the one or more options; and
   submit, to the industrial automation device, a command request to configure the capability based on the configuration selection.
Embodiment 18. The computer-readable storage media device of embodiment 17, wherein the capability is a first capability, and wherein the program instructions comprise further instructions that, upon execution by the one or more processors, cause the one or more processors to:
   in response to receiving the capabilities response, populate a device profile with the one or more options of the first capability, wherein the device profile comprises plurality of capabilities of the industrial automation device including the first capability and the one or more options of the first capability, and
   wherein the displaying the one or more options of the first capability comprises retrieving the one or more options of the first capability from the device profile for display.
Embodiment 19. The computer-readable storage media device of embodiment 18, wherein the populating the device profile comprises:
   retrieving, for each of the one or more options, an option definition from a schema, wherein the schema comprises definitions for all options of the capability available across multiple devices, wherein the one or more options is a subset of the all options, and
   binding each retrieved option definition to the device profile.
Embodiment 20. The computer-readable storage media device of embodiment 17, wherein the industrial automation device comprises a motor control device, and wherein the capability comprises one of start control, stop control, torque control, acceleration rates, direction control, overload protection, voltage control, and preset speed.

## Claims

1. A method for interfacing between client devices and industrial automation devices in industrial automation environments, the method comprising, by a client device:
submitting a capabilities request to an industrial automation device for options of a capability supported by the industrial automation device, the industrial automation device being configured to control a process element in an industrial automation environment;
receiving a capabilities response from the industrial automation device indicative of one or more options of the capability;
displaying the one or more options of the capability in a user interface;
receiving, via the user interface, a configuration selection of one of the one or more options; and
submitting, to the industrial automation device, a command request to configure the capability based on the configuration selection.

2. The method of claim 1, wherein the capability is a first capability, and wherein the method further comprises, by the client device:
in response to receiving the capabilities response, populating a device profile with the one or more options of the first capability, wherein the device profile comprises plurality of capabilities of the industrial automation device including the first capability and the one or more options of the first capability, and
wherein the displaying the one or more options of the first capability comprises retrieving the one or more options of the first capability from the device profile for display.

3. The method of claim 2 wherein the populating the device profile comprises:
retrieving, for each of the one or more options, an option definition from a schema, wherein the schema comprises definitions for all options of the capability available across multiple devices, wherein the one or more options is a subset of the all options, and
binding each retrieved option definition to the device profile.

4. The method of one of claims 1 to 3, wherein the submitting the command request to the industrial automation device comprises submitting the command request via a mapping service, and wherein the method further comprises, by the mapping service:
receiving the command request,
translating the command request to a domain-specific command request adapted to the industrial automation device, and
forwarding the domain-specific command request to the industrial automation device.

5. The method of claim 4 further comprising, by the mapping service:
submitting, to the industrial automation device, an addressing request for addressing information associated with the capability;
receiving, from the industrial automation device, an addressing response having the addressing information associated with the capability; and
storing the addressing information, wherein the translating the command request comprises utilizing the addressing information to generate the domain-specific command request,
preferably further comprising, by the industrial automation device:
receiving the addressing request;
retrieving the addressing information from a capabilities list maintained in the industrial automation device; and
providing, to the mapping service, the addressing response.

6. The method of one of claims 1 to 5, at least one of:
further comprising, by the industrial automation device:
receiving the capabilities request from the client device;
retrieving identifications of the one or more options from a capabilities list maintained in the industrial automation device; and
providing the capabilities response to the client device, the capabilities response comprising the identifications of the one or more options; and
wherein the industrial automation device comprises a motor control device, and wherein the capability comprises one of start control, stop control, torque control, acceleration rates, direction control, overload protection, voltage control, and preset speed.

7. A system for interfacing between client devices and industrial automation devices in industrial automation environments comprising:
a client device comprising one or more first processors and one or more memories operably coupled to the one or more first processors, the one or more memories having stored thereon first software instructions, that upon execution by the one or more first processors, cause the one or more first processors to:
submit a capabilities request to an industrial automation device for options of a capability supported by the industrial automation device;
receive a capabilities response from the industrial automation device indicative of one or more options of the capability;
display the one or more options of the capability in a user interface;
receive, via the user interface, a configuration selection of one of the one or more options; and
submit, to the industrial automation device, a command request to configure the capability based on the configuration selection.

8. The system of claim 7, wherein the capability is a first capability, and wherein the first software instructions comprise further instructions, that upon execution by the one or more first processors, cause the one or more first processors to:
in response to receiving the capabilities response, populate a device profile with the one or more options of the first capability, wherein the device profile comprises plurality of capabilities of the industrial automation device including the first capability and the one or more options of the first capability, and
wherein the displaying the one or more options of the first capability comprises retrieving the one or more options of the first capability from the device profile for display,
wherein the populating the device profile preferably comprises:
retrieving, for each of the one or more options, an option definition from a schema, wherein the schema comprises definitions for all options of the capability available across multiple devices, wherein the one or more options is a subset of the all options, and
binding each retrieved option definition to the device profile.

9. The system of claim 7 or 8 further comprising a mapping service, wherein the submitting the command request to the industrial automation device comprises submitting the command request via the mapping service, the mapping service comprising one or more second processors and one or more second memories operably coupled to the one or more second processors, the one or more second memories having second software instructions stored thereon that, upon execution by the one or more second processors, cause the one or more second processors to:
receive the command request,
translate the command request to a domain-specific command request adapted to the industrial automation device, and
forward the domain-specific command request to the industrial automation device.

10. The system of claim 9 wherein the second software instructions comprise further instructions, that upon execution by the one or more second processors, cause the one or more second processors to:
submit, to the industrial automation device, an addressing request for addressing information associated with the capability;
receive, from the industrial automation device, an addressing response having the addressing information associated with the capability; and
store the addressing information, wherein the translating the command request comprises utilizing the addressing information to generate the domain-specific command request.

11. The system of claim 10 further comprising the industrial automation device, the industrial automation device comprising one or more third processors and one or more third memories operable coupled to the one or more third processors, the one or more third memories having third software instructions stored thereon that, upon execution by the one or more third processors, cause the one or more third processors to:
receive the addressing request;
retrieve the addressing information from a capabilities list maintained in the industrial automation device; and
provide, to the mapping service, the addressing response.

12. The system of one of claims 7 to 11, at least one of:
further comprising the industrial automation device, the industrial automation device comprising one or more third processors and one or more third memories operable coupled to the one or more third processors, the one or more third memories having third software instructions stored thereon that, upon execution by the one or more third processors, cause the one or more third processors to:
receive the capabilities request from the client device;
retrieve identifications of the one or more options from a capabilities list maintained in the industrial automation device; and
provide the capabilities response to the client device, the capabilities response comprising the identifications of the one or more options; and
further comprising the industrial automation device, wherein the industrial automation device comprises a motor control device, and wherein the capability comprises one of start control, stop control, torque control, acceleration rates, direction control, overload protection, voltage control, and preset speed.

13. A computer-readable storage media device having program instructions stored thereon to interface with industrial automation devices in industrial automation environments, wherein the program instructions, upon execution by one or more processors, cause the one or more processors to:
submit a capabilities request to an industrial automation device for options of a capability supported by the industrial automation device;
receive a capabilities response from the industrial automation device indicative of one or more options of the capability;
display the one or more options of the capability in a user interface;
receive, via the user interface, a configuration selection of one of the one or more options; and
submit, to the industrial automation device, a command request to configure the capability based on the configuration selection.

14. The computer-readable storage media device of claim 13, wherein the capability is a first capability, and wherein the program instructions comprise further instructions that, upon execution by the one or more processors, cause the one or more processors to:
in response to receiving the capabilities response, populate a device profile with the one or more options of the first capability, wherein the device profile comprises plurality of capabilities of the industrial automation device including the first capability and the one or more options of the first capability, and
wherein the displaying the one or more options of the first capability comprises retrieving the one or more options of the first capability from the device profile for display,
wherein the populating the device profile preferably comprises:
retrieving, for each of the one or more options, an option definition from a schema, wherein the schema comprises definitions for all options of the capability available across multiple devices, wherein the one or more options is a subset of the all options, and
binding each retrieved option definition to the device profile.

15. The computer-readable storage media device of claim 13 or 14, wherein the industrial automation device comprises a motor control device, and wherein the capability comprises one of start control, stop control, torque control, acceleration rates, direction control, overload protection, voltage control, and preset speed.
